# EUROPEAN PATENT SPECIFICATION

(11) **EP 2 583 482 B1**
(45) Date of publication and mention of the grant of the patent: **27.04.2016**
(21) Application number: 11796010.4
(22) Date of filing: 07.06.2011
(51) Int. Cl.: H04L 29/12

(54) **A SYSTEM FOR VERIFYING A VIDEO CALL NUMBER ENTRY IN A DIRECTORY SERVICE**
SYSTEM ZUR ÜBERPRÜFUNG EINES VIDEORUFNUMMERNEINTRAGS IN EINEM VERZEICHNISDIENST
SYSTÈME DE VÉRIFICATION DE L'ENREGISTREMENT D'UN NUMÉRO D'APPEL VIDÉO AUPRÈS D'UN SERVICE D'ANNUAIRE

(30) Priority: 17.06.2010 NO 20100867
(43) Date of publication of application: 24.04.2013
(73) Proprietor: Cisco Systems International Sarl, 1180 Rolle (CH)
(72) Inventor: DAHL, Axel, San Diego, California 92116 (US)
(74) Representative: Kazi, Ilya
(86) International application number: PCT/NO2011/000165
(87) International publication number: WO 2011/159164

(56) References cited:
- WO-A2-2010/019348
- WO-A2-2010/019348
- US-A1- 2005 097 363
- US-A1- 2008 022 375
- US-A1- 2008 209 528
- US-A1- 2009 309 698
- US-A1- 2009 309 698
- US-A1- 2010 095 350
- SAJAD SHIRALI-SHAHREZA ET AL: "Bibliography of works done on CAPTCHA", INTELLIGENT SYSTEM AND KNOWLEDGE ENGINEERING, 2008. ISKE 2008. 3RD INTERNATIONAL CONFERENCE ON, IEEE, PISCATAWAY, NJ, USA, 17 November 2008 (2008-11-17), pages 205-210, XP031381933, ISBN: 978-1-4244-2196-1
- "Secure Multi-Image CAPTCHA", IP.COM JOURNAL, IP.COM INC., WEST HENRIETTA, NY, US, 6 January 2010 (2010-01-06), XP013136287, ISSN: 1533-0001
- JING-SONG CUI ET AL: "A CAPTCHA Implementation Based on 3D Animation", MULTIMEDIA INFORMATION NETWORKING AND SECURITY, 2009. MINES '09. INTERNATIONAL CONFERENCE ON, IEEE, PISCATAWAY, NJ, USA, 18 November 2009 (2009-11-18), pages 179-182, XP031592150, ISBN: 978-0-7695-3843-3

## Description

### Field of the invention

The present invention relates to managing a directory service of video call numbers, and in particular to a system and method of verifying a video call number entry in the directory service.

### Background of the invention

For many decades, the standard means of real-time, long-distance communication has been the telephone, almost every individual within an organization will have a telephone number which is globally unique and by which they can be reached by any telephone in the world.

In more recent years, calls via IP (Internet Protocol) have been gaining prominence, as they have a number of advantages, they are usually free at the point of use, can offer better audio fidelity using high-quality audio codecs, allow video and data sharing as well as simply voice, etc.

Currently, individuals generally provide their contact information in the form of a telephone number, which is short, globally unique, easy to use and works between organizations which have had no previous contact. For IP-media calls, in the following referred to as video calls, several different addressing or number schemes have been developed following the idea of telephone numbers, including but not limited to E.164 (network access number, telephone number, etc.), H.323 IDs (alphanumeric strings representing names, e-mail-like addresses, etc.), and any others defined in Recommendation H.225.0. The video call numbers or video-URIs are unique within a Zone, Domain, among Zones, and among Domains.

Within a network, many IP setups support ways of mitigating the complexity of making an IP media call, e.g. preconfigured address books on an endpoint let a user call an individual by selecting them from a list. These solutions generally only work within an organization, since they rely on endpoints and servers having the information available to them already, as such they only allow individuals to call users whose details are already in the system.

This becomes problematic when an individual wishes to call a user from a different organization, one whose details are not already known to the individual wishing to make the call.

Another possible solution would be to allow users, individuals and/or organizations, to register their video call numbers with a directory service of video call numbers. However, when allowing everyone to register video call numbers with the directory service, there is a possibility that someone could register a video call number that is not a valid address to a real video call endpoint.

Further, many ITSP (Internet Telephony Service Provider) block video call requests from clients outside the ITSP's domain. In this case, a video call from a first video endpoint outside a ITSP's domain to a second video endpoint inside the ITSP's domain fails even though the second endpoint has a valid address inside the ITSP's domain. Thus addresses within an ITSP's domain blocking outside video call requests should be considered invalid by a global directory service.

Therefore, there is a need in the art for a directory service of video call numbers that includes a method for verifying that video call entries in the directory service are global accessible valid video call numbers.

WO 2010/019348 discloses a method and a system for automated user authentication.

US 2008/0209528 discloses a system and a method for verifying a user identity entry in an identity registry.

Aspects of the invention are recited in the independent claims and preferred features are set out in the dependent claims.

### Summary of the invention

It is an object of the present invention to provide a system and a method for verifying a video call number entry in a directory service, the directory service comprising a client interface connected to a computer network, an application service and a video calling service.

The features defined in the independent claims enclosed characterise the system and the method.

### Brief description of the drawings

In order to make the invention more readily understandable, the discussion that follows will refer to the accompanying drawings, wherein
Figure 1 illustrates an exemplary communication system according the present invention,
Figure 2 is a flow chart showing an exemplary communication session according to the present invention, and
Figure 3 is a flow chart showing an exemplary embodiment of the communication session of Figure 2.

### Detailed description

In the following, the present invention will be discussed by describing preferred embodiments, and by referring to the accompanying drawings. However, people skilled in the art will realize other applications and modifications within the scope of the invention as defined in the enclosed independent claims.

The present invention introduces a novel system and a novel method for allowing users of video call endpoints to register their video call addresses in a local, regional and/or global directory service, where the directory service is configured to validate whether the video call address is a valid accessible address and that the user registering the video call number actually has physical access to the a video call device using the video call address.

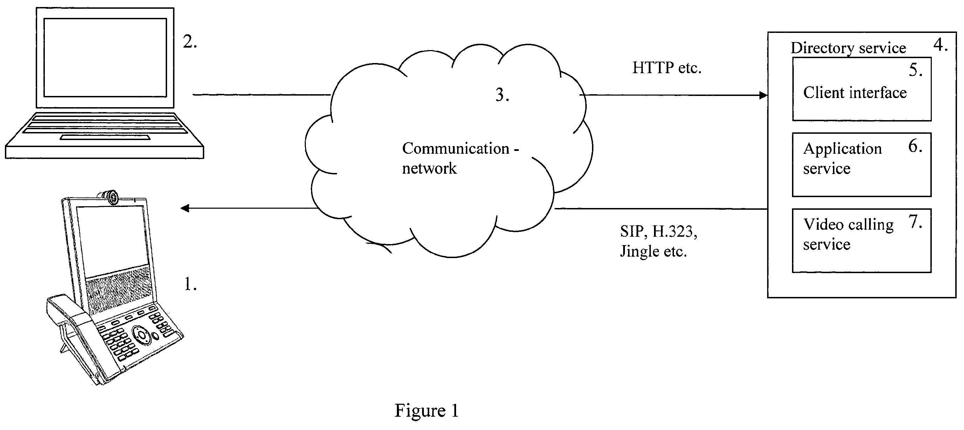

Figure 1 is a block diagram showing an exemplary communication system according to the present invention.

The exemplary system comprises a video call endpoint 1, a personal computer (PC) 2, a communication network 3 and a directory service 4, wherein the directory service 4 further comprises a client interface 5, an application service 6 and a video calling service 7. The communication network 3 is typically a packet switched network employing the IP-protocol. The PC 2 is typically employing the HTTP protocol over the communication network 3 when communicating with the client interface 5. Similarly is the video calling service 7 typically employing media call protocols such as H.323, SIP, Jingle etc. when communicating with the video call endpoint 1. Although the video call endpoint 1 and the PC 2 for simplicity are shown as two separate units, both units could be incorporated within a single device where the video call endpoint 1 and the PC 2 are two different applications which may use different application protocols. As depicted in Figure 1, the directory service communicates with both the video call endpoint 1 and the PC 2 over the same communication network, but it some situations where Quality Of Service is of high importance it might also be useful to use a separate communication network for the media calls.

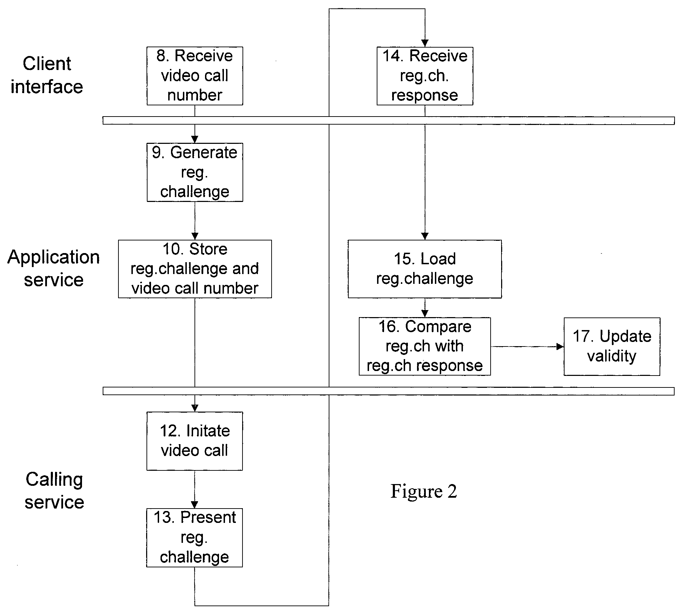

The client interface 5 is typically in a HTML, Java, or similar web page format. The client interface includes listings of video call numbers uploaded into the directory service, search functions to find video call numbers in the directory service and the possibility to upload video call numbers into the directory service. When a user registers a video call number, the video call number will be tagged "Not verified". A "Verify Video call number" button is typically displayed next to each video call number tagged "Not verified", where pressing the button initiates a verification process enabled by the present invention.
An exemplary method of verifying a call number entry in a directory service is shown in Figure 2. The method begins in step 8, wherein the client interface 5 receives a video call number for entry in the directory service 4, and submits the video call number to the application service 6 to initiate the verification of the video call number. The application service 6 may comprise an application server, i.e. a server computer configured to perform the operation and/or function of the application service as described herein. Alternatively, the application service may include a plurality of operatively interconnected computers, which are configured to interoperate in order to provide the operation and/or function of the application service as described herein.
The step of transmitting the video call number to the application service 6 could e.g. be initiated by pressing a "Verify Video call number" button as described above.
When the application service 6 receives the video call number from the client interface 5, the application service 6 generates a registration challenge in the registration generating step 9. The registration challenge is typically a sequence of alphanumeric letters, e.g. 12345, but could be any suitable registration challenge e.g. as exemplified below. The application service 6, in step 10, then stores the registration challenge and the video call number in a session, and submits both the registration challenge and the video call number to the video calling service 7.

The video calling service 7 may comprise a video calling server, i.e. a server computer configured to perform the operation and/or function of the video calling service as described herein. Alternatively, the video calling service may include a plurality of operatively interconnected computers, which are configured to interoperate in order to provide the operation and/or function of the video calling service as described herein.
In step 12, the video calling service 7, when receiving the registration challenge and the video call number, initiates a video call session to the video call number.
The video calling service 7 is typically using one of SIP, H.323 and Jingle media call protocols to initiate the video call session. If the video call session fails, typically if the video calling service is not receiving a response on a call request, e.g. a SIP INIVTE message, an error message is returned to the application service 6.
The application service 6 then preferably keeps the not verified status of the video call number entry.
Alternatively, the status of the video call number entry could be changed to "Not Valid". In yet another alternative, to avoid users or computers to block the directory service, the call number entry is deleted after failing a predefined number of verification attempts.

Upon successful initiation of the video call session the video call service 7, in step 13, presents the registration challenge to the user over the video call session. The registration challenge is preferably presented to the user visually, or visually and audible. After the registration challenge is presented to the user the video call session is disconnected.

The user, being presented with the registration challenge, enters the registration challenge response, e.g. 12345, using the client interface 5. In step 14, the client interface 5 receives the entered registration challenge response and submits the received registration challenge response and the video call number to the application service 6 to validate the registration challenge response.

Upon receiving the registration challenge response, the application service 6 loads, in step 15, the registration challenge and the video call number saved previously for the same session. In step 16, the application service 6 compares the saved and entered video call numbers and registration challenge/registration challenge response respectively, and upon finding an exact match, in step 17, the application service 6 updates the directory service, indicating the video call number being valid. If not finding an exact match the application service 6 preferably keeps the not verified status of the video call number entry. Alternatively, the status of the video call number entry could be changed to "Not Valid". In yet another alternative, to avoid users or computers to block the directory service, the call number entry may be deleted after failing a predefined number of verification attempts.

According to one exemplary embodiment of the present invention the registration challenge is a CAPCHTA (Completely Automated Public Turing test to tell Computers and Humans Apart) image. Several different CAPCHTA methods are known by the person skilled in the art, such as 3D CAPCHTA, Image based CAPCHTA and the common text based CAPCHTA, where user enters an alphanumeric sequence from a distorted image that appears on a screen. The use of an alphanumeric CAPCHTA also allows the sequence to be presented audibly to a user having problems reading the distorted alphanumeric sequence.

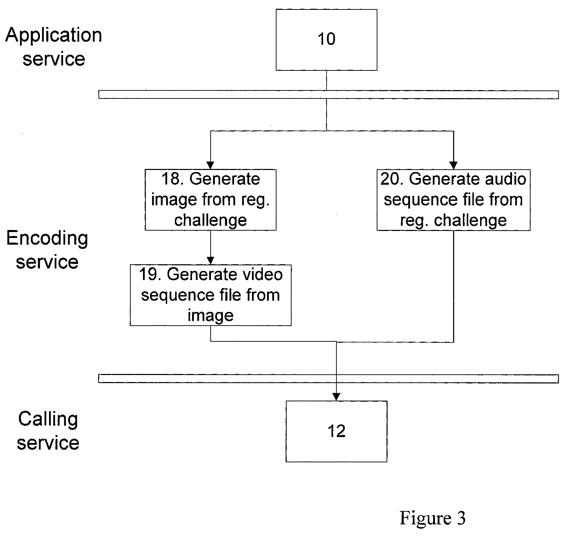

Figure 3 shows one exemplary embodiment of encoding a registration challenge to be presented over a video call session. According to this exemplary embodiment of the present invention the Directory service 4 further comprises an encoding service between the application service 6 and the video calling service 7. In step 18, the encoding service receives the registration challenge from the application service 6.

The registration challenge has been submitted by the application service in step 10. Thus, in this embodiment, the application service, in step 10, stores the registration challenge and the video call number in the session and submits both the registration challenge and the video call number to the video calling service 7 via the encoding service.

In one exemplary embodiment of the invention the registration challenge is an alphanumeric sequence generated by the application service 6. Further in step 18, upon receiving the alphanumeric sequence, the encoding service generates a one image file based on the alphanumeric sequence using any image/CAPTCHA creating library, e.g. ImageMagik library or the ReCAPTCHA Api.
In the subsequent step 19, the encoding service generates a video sequence file, e.g. by creating multiple copies of the image file and encoding the multiple copies of the image file into a video format. E.g. if the video sequence file is encoded using a 10 frames per second frame rate, and the registration challenge shall be presented for 60 seconds, then the encoding service generates and encodes 600 images into a video format. This can easily be done using tools known to the person skilled in the art, such as ffmpeg tools. The video format of the video sequence file is typically H.263 or H.264. The video sequence file is then submitted to the video calling service 7, e.g. as disclosed above, to be presented for a user over the video call session. More particularly, in this embodiment, step 19 may be followed by step 12, performed by the video call service, of initiating a video call session, as described with reference to figure 2 above.

In yet an alternative embodiment of the present invention, the encoding service also comprises an audio encoder. In this case the alphanumeric sequence generated by the application service 6 may also be transmitted to the audio encoder, and in step 20, the alphanumeric sequence is entered into a text-to-speech generator and converted into an audio sequence file. The audio sequence file is then submitted to the video calling service 7 as disclosed above to be presented for a user over the video call session.

When the present specification mentions certain standard specifications, the following should be considered as references to current, exemplary versions of the standards:
ITU-T H.323 (12/09), ITU-T H.263 (01/05), ITU-T H.264 (03/10), ITU-T H.225.0 (12/09), ITU-T E.164 (12/05): ITU-T (International Telecommunication Union Telecommunication Standardization Sector).
SIP: Session Initiation Protocol (RFC 3261) from IETF (Internet Engineering Task Force) Network Working Group.
Jingle: Jingle (XEP-0166 2009-12-23) from XMPP Standards Foundation.

Principles and elements described herein may however also be implemented in conformity with former and/or future versions of the above standards/specifications. Alternatively, such principles or elements may be implemented in conformity with other standards or specifications, or they may not necessarily conform to any particular standard or specification.

## Claims

1. A system for verifying a video call number entry in a directory service (4), the directory service comprising a client interface (5) connected to a computer network (3), an application service (6) and a video calling service (7),
the client interface (5) being configured to:
receive (8) a video call number from a user for entry in the directory service (4), and submit the received video call number to the application service (6) to initiate verification of the video call number,
receive (14) a registration challenge response from a user, and submit the received registration challenge response to the application service (6) to validate the registration challenge response;
the application service (6) being configured to:
receive the video call number from the client interface (5) for verification, generate (9) a registration challenge, store (10) the registration challenge and the video call number in a session, and submit the registration challenge and the video call number to the video calling service,
receive the registration challenge response from the client interface (5), load (15) registration challenge from the session, and upon finding (16) a positive match between the registration challenge and the registration challenge response, updating (17) the directory service (4) indicating the video call number being valid; and
the video calling service (7) being configured to:
receive the video call number and the registration challenge from the application service (6),
initiate (12) a video call session to the video call number, and
upon successful initiation of the video call session, presenting (13) the registration challenge to the user over the video call session,
wherein the system further comprises an encoding service configured to:
generate (18) a one image file based on the registration challenge, and
generate (19) a video sequence file by creating multiple copies of the image file and encode the multiple copies of the image file into a video format,
wherein video calling service (7) is further configured to present the registration challenge to the user over the video call session by transmitting the video sequence file; and
wherein the client interface (5) is in web page format and includes listings of video call numbers uploaded into the directory service (4), search functions to find video call numbers in the directory service (4) and the possibility to upload video call numbers into the directory service (4).

2. A system according to claim 1, wherein the registration challenge comprises an alphanumeric sequence, and the system further comprise an encoding service configured to
generate a one image file based on the alphanumeric sequence, and
generate a video sequence file by creating multiple copies of the image file and encode the multiple copies of the image file into a video format.

3. A system according to claim 2, wherein the encoding service is further configured to generate (20) an audio sequence file based on the alphanumeric sequence using a text-to-speech generator.

4. A system according to claim 3, wherein the video calling service (7) is further configured to present the registration challenge to the user over the video call session by transmitting the video sequence file and the audio sequence file.

5. A system according to claim 1, wherein the application service (6) is configured to generate a CAPCHTA image registration challenge.

6. A system according to claim 1, wherein the video calling service (7) is configured to initiate the video call session using one of SIP, H.323 and Jingle.

7. A system according to claim 1, wherein the encoding service is configured to encode the video sequence file using one of H.263 and H.264.

8. A method for verifying a video call number entry in a directory service (4), the directory service comprising a client interface (5) connected to a computer network (3), an application service (6) and a video calling service (7), wherein the method comprises:
receiving (8) a video call number entered by a user using the client interface (5),
submitting by the client interface (5) the received video call number to the application service (6) to initiate verification of the video call number,
receiving by the application service (6) the video call number from the client interface (5) for verification,
generating (9) by the application service (6) a registration challenge,
storing (10) by the application service (6) the registration challenge and the video call number in a session,
submitting by the application service (6) the registration challenge and the video call number to the video calling service (7),
receiving by the video calling service (7) the video call number and the registration challenge from the application service (6),
initiating (12) by the video calling service (7) a video call session to the video call number,
upon successful initiation of the video call session, presenting (13) the registration challenge to a user over the video call session,
receiving (14) a registration challenge response entered by the user using the client interface (5),
submitting by the client interface (5) the received registration challenge response to the application service (6) to validate the registration challenge response,
receiving by the application service (6) the registration challenge response from the client interface (5),
loading (15) by the application service (6) registration challenge from the session; and
upon finding (16) a positive match between the registration challenge and the registration challenge response, updating (17) by the application service (6) the directory service (4) indicating the video call number being valid,
wherein generating (9) a registration challenge further comprises:
generating (18) a one image file based on the registration challenge; and
generating (19) a video sequence file by creating multiple copies of the image file and encode the multiple copies of the image file into a video format,
wherein the registration challenge is presented to the user visually over the video call session by transmitting the video sequence file; and
wherein the client interface (5) is in web page format and includes listings of video call numbers uploaded into the directory service (4), search functions to find video call numbers in the directory service (4) and the possibility to upload video call numbers into the directory service (4).

9. A method according to claim 8, wherein generating (9) a registration challenge further comprises:
generating an alphanumeric sequence,
generating (18) a one image file based on the alphanumeric sequence; and
generating (19) a video sequence file by creating multiple copies of the image file and encode the multiple copies of the image file into a video format.

10. A method according to claim 9, wherein the method further comprises generating an audio sequence file based on the alphanumeric sequence using a text-to-speech generator.

11. A method according to one of claims 8-10, wherein the registration challenge is presented to the user visually and audible over the video call session.

12. A method according to claim 8, wherein at least one of:
the registration challenge is a CAPTCHA image;
the video call session is initiated using one of SIP, H.323 and Jingle.

13. A method according to claim 8, wherein the video sequence file video format is one of H.263 and H.264.

## Patentansprüche

1. System zur Überprüfung eines Videorufnummereintrags in einem Verzeichnisdienst (4), wobei der Verzeichnisdienst Folgendes umfasst: eine Client-Schnittstelle (5), die mit einem Computernetzwerk (3) verbunden ist, einen Anwendungsdienst (6) und einen Videotelefoniedienst (7), wobei die Client-Schnittstelle (5) für Folgendes konfiguriert ist:
Empfangen (8) einer Videorufnummer von einem Benutzer für den Eintrag in den Verzeichnisdienst (4) und Senden der empfangenen Videorufnummer zu dem Anwendungsdienst (6), um die Überprüfung der Videorufnummer einzuleiten,
Empfangen (14) einer Anmeldungsaufforderungsantwort von einem Benutzer, und Senden der empfangenen Anmeldungsaufforderungsantwort zu dem Anwendungsdienst (6), um die Anmeldungsaufforderungsantwort zu validieren;
wobei der Anwendungsdienst (6) für Folgendes konfiguriert ist:
Empfangen der Videorufnummer von der Client-Schnittstelle (5) zur Überprüfung, Erzeugen (9) einer Anmeldungsaufforderung, Speichern (10) der Anmeldungsaufforderung und der Videorufnummer in einer Sitzung und Senden der Anmeldungsaufforderung und der Videorufnummer zu dem Videotelefoniedienst,
Empfangen der Anmeldungsaufforderungsantwort von der Client-Schnittstelle (5), Laden (15) der Anmeldungsaufforderung von der Sitzung und nach dem Auffinden (16) einer positiven Übereinstimmung zwischen der Anmeldungsaufforderung und der Anmeldungsaufforderungsantwort: Aktualisieren (17) des Verzeichnisdienstes (4), wodurch angezeigt wird, dass die Videorufnummer gültig ist; und wobei der Videotelefoniedienst (7) für Folgendes konfiguriert ist:
Empfangen der Videorufnummer und der Anmeldungsaufforderung von dem Anwendungsdienst (6),
Einleiten (12) einer Videoanrufsitzung zu der Videorufnummer und
nach erfolgreicher Einleitung der Videoanrufsitzung, Anzeigen (13) der Anmeldungsaufforderung für den Benutzer über die Videoanrufsitzung,
wobei das System ferner einen Codierungsdienst umfasst, der für Folgendes konfiguriert ist:
Erzeugen (18) einer Einzelbilddatei basierend auf der Anmeldungsaufforderung und
Erzeugen (19) einer Videosequenzdatei, indem mehrere Kopien der Bilddatei erzeugt und die mehreren Kopien der Bilddatei in einem Videoformat codiert werden,
wobei der Videotelefoniedienst (7) ferner dafür konfiguriert ist, die Anmeldungsaufforderung dem Benutzer über die Videoanrufsitzung durch Übertragen der Videosequenzdatei anzuzeigen; und
wobei die Client-Schnittstelle (5) in Webseitenformat vorliegt und Folgendes umfasst: Listen von Videorufnummern, die in den Verzeichnisdienst (4) hochgeladen wurden, Suchfunktionen zum Auffinden von Videorufnummern in dem Verzeichnisdienst (4) und die Möglichkeit, Videorufnummern in den Verzeichnisdienst (4) hochzuladen.

2. System nach Anspruch 1, wobei die Anmeldungsaufforderung eine alphanumerische Zeichenfolge umfasst und wobei das System ferner einen Codierungsdienst umfasst, der für Folgendes konfiguriert ist:
Erzeugen einer Einzelbilddatei basierend auf der alphanumerischen Zeichenfolge und
Erzeugen einer Videosequenzdatei, indem mehrere Kopien der Bilddatei erzeugt und die mehreren Kopien der Bilddatei in einem Videoformat codiert werden.

3. System nach Anspruch 2, wobei der Codierungsdienst ferner dafür konfiguriert ist, eine Audiosequenzdatei basierend auf der alphanumerischen Zeichenfolge unter Verwendung eines Text-zu-Sprache-Generators zu erzeugen (20).

4. System nach Anspruch 3, wobei der Videotelefoniedienst (7) ferner dafür konfiguriert ist, die Anmeldungsaufforderung dem Benutzer über die Videoanrufsitzung durch Übertragen der Videosequenzdatei und der Audiosequenzdatei anzuzeigen.

5. System nach Anspruch 1, wobei der Anwendungsdienst (6) dafür konfiguriert ist, eine Anmeldungsaufforderung mit CAPCHTA-Bild zu erzeugen.

6. System nach Anspruch 1, wobei der Videotelefoniedienst (7) dafür konfiguriert ist, die Videoanrufsitzung mit Hilfe von SIP, H.323 oder Jingle einzuleiten.

7. System nach Anspruch 1, wobei der Codierungsdienst dafür konfiguriert ist, die Videosequenzdatei mit Hilfe von H.263 oder H.264 zu codieren.

8. Verfahren zur Überprüfung eines Videorufnummereintrags in einem Verzeichnisdienst (4), wobei der Verzeichnisdienst Folgendes umfasst: eine Client-Schnittstelle (5), die mit einem Computernetzwerk (3) verbunden ist, einen Anwendungsdienst (6) und einen Videotelefoniedienst (7), wobei das Verfahren Folgendes umfasst:
Empfangen (8) einer Videorufnummer, die von einem Benutzer mit Hilfe der Client-Schnittstelle (5) eingegeben wurde,
Senden der empfangenen Videorufnummer durch die Client-Schnittstelle (5) zu dem Anwendungsdienst (6), um die Überprüfung der Videorufnummer einzuleiten,
Empfangen der Videorufnummer von der Client-Schnittstelle (5) durch den Anwendungsdienst (6) zur Verifizierung,
Erzeugen (9) einer Anmeldungsaufforderung durch den Anwendungsdienst (6),
Speichern (10) der Anmeldungsaufforderung und der Videorufnummer mit Hilfe des Anwendungsdienstes (6) in einer Sitzung,
Senden durch den Anwendungsdienst (6) der Anmeldungsaufforderung und der Videorufnummer zu dem Videotelefoniedienst (7),
Empfangen durch den Videotelefoniedienst (7) der Videorufnummer und der Anmeldungsaufforderung von dem Anwendungsdienst (6),
Einleiten (12) von dem Videotelefoniedienst (7) einer Videoanrufsitzung zu der Videorufnummer,
nach erfolgreicher Einleitung der Videoanrufsitzung, Anzeigen (13) der Anmeldungsaufforderung für einen Benutzer über die Videoanrufsitzung,
Empfangen (14) einer Anmeldungsaufforderungsantwort, die von dem Benutzer mit Hilfe der Client-Schnittstelle (5) eingegeben wird,
Senden der empfangenen Anmeldungsaufforderungsantwort durch die Client-Schnittstelle (5) zu dem Anwendungsdienst (6), um die Anmeldungsaufforderungsantwort zu validieren,
Empfangen der Anmeldungsaufforderungsantwort von der Client-Schnittstelle (5) durch den Anwendungsdienst (6),
Laden (15) der Anmeldungsaufforderung von der Sitzung durch den Anwendungsdienst (6); und
nach dem Auffinden (16) einer positiven Übereinstimmung zwischen der Anmeldungsaufforderung und der Anmeldungsaufforderungsantwort: Aktualisieren (17) des Verzeichnisdienstes (4) durch den Anwendungsdienst (6), wobei der Verzeichnisdienst anzeigt, dass die Videorufnummer gültig ist,
wobei das Erzeugen (9) einer Anmeldungsaufforderung ferner Folgendes umfasst:
Erzeugen (18) einer Einzelbilddatei basierend auf der Anmeldungsaufforderung und
Erzeugen (19) einer Videosequenzdatei, indem mehrere Kopien der Bilddatei erzeugt und die mehreren Kopien der Bilddatei in einem Videoformat codiert werden,
wobei die Anmeldungsaufforderung dem Benutzer über die Videoanrufsitzung durch Übertragen der Videosequenzdatei visuell angezeigt wird; und
wobei die Client-Schnittstelle (5) in Webseitenformat vorliegt und Folgendes umfasst: Listen von Videorufnummern, die in den Verzeichnisdienst (4) hochgeladen wurden, Suchfunktionen zum Auffinden von Videorufnummern in dem Verzeichnisdienst (4) und die Möglichkeit, Videorufnummern in den Verzeichnisdienst (4) hochzuladen.

9. Verfahren nach Anspruch 8, wobei das Erzeugen (9) einer Anmeldungsaufforderung ferner Folgendes umfasst:
Erzeugen einer alphanumerischen Zeichenfolge,
Erzeugen (18) einer Einzelbilddatei basierend auf der alphanumerischen Zeichenfolge und
Erzeugen (19) einer Videosequenzdatei, indem mehrere Kopien der Bilddatei erzeugt und die mehreren Kopien der Bilddatei in einem Videoformat codiert werden.

10. Verfahren nach Anspruch 9, wobei das Verfahren ferner Folgendes umfasst: Erzeugen einer Audiosequenzdatei basierend auf der alphanumerischen Zeichenfolge unter Verwendung eines Text-zu-Sprache-Generators.

11. Verfahren nach einem der Ansprüche 8 bis 10, wobei die Anmeldungsaufforderung dem Benutzer visuell und akustisch über die Videoanrufsitzung angezeigt wird.

12. Verfahren nach Anspruch 8, wobei mindestens:
die Anmeldungsaufforderung ein CAPTCHA-Bild ist oder
die Videoanrufsitzung mit Hilfe von SIP, H.323 oder Jingle eingeleitet wird.

13. Verfahren nach Anspruch 8, wobei das Videoformat der Videosequenzdatei H.263 oder H.264 ist.

## Revendications

1. Système de vérification une saisie d'un numéro d'appel vidéo dans un service d'annuaire (4), le service d'annuaire comportant une interface client (5) connectée à un réseau informatique (3), un service d'applications (6) et un service d'appel vidéo (7),
l'interface client (5) étant configurée pour :
recevoir (8) un numéro d'appel vidéo en provenance d'un utilisateur à des fins de saisie dans le service d'annuaire (4), et soumettre le numéro d'appel vidéo reçu au service d'applications (6) pour initialiser la vérification du numéro d'appel vidéo,
recevoir (14) une réponse au défi d'enregistrement en provenance d'un utilisateur, et soumettre la réponse au défi d'enregistrement reçue au service d'applications (6) pour valider la réponse au défi d'enregistrement ;
le service d'applications (6) étant configuré pour :
recevoir le numéro d'appel vidéo en provenance de l'interface client (5) à des fins de vérification, générer (9) un défi d'enregistrement, stocker (10) le défi d'enregistrement et le numéro d'appel vidéo dans une session, et soumettre le défi d'enregistrement et le numéro d'appel vidéo au service d'appel vidéo,
recevoir la réponse au défi d'enregistrement en provenance de l'interface client (5), charger (15) le défi d'enregistrement en provenance de la session, et au moment de découvrir (16) une correspondance positive entre le défi d'enregistrement et la réponse au défi d'enregistrement, mettre à jour (17) le service d'annuaire (4) pour indiquer le numéro d'appel vidéo comme étant valide ; et
le service d'appel vidéo (7) étant configuré pour :
recevoir le numéro d'appel vidéo et le défi d'enregistrement en provenance du service d'applications (6),
initialiser (12) une session d'appel vidéo pour le numéro d'appel vidéo, et
dès l'aboutissement de l'initialisation de la session d'appel vidéo, présenter (13) le défi d'enregistrement à l'utilisateur par le biais de la session d'appel vidéo,
dans lequel le système comporte par ailleurs un service de codage configuré pour :
générer (18) un fichier à une image en fonction du défi d'enregistrement, et
générer (19) un fichier séquence vidéo en créant de multiples copies du fichier d'image et coder les multiples copies du fichier d'image en un format vidéo,
dans lequel le service d'appel vidéo (7) est par ailleurs configuré pour présenter le défi d'enregistrement à l'utilisateur par le biais de la session d'appel vidéo par la transmission du fichier séquence vidéo ; et
dans lequel l'interface client (5) est dans un format de page Web et comprend des listes de numéros d'appel vidéo téléchargés en amont dans le service d'annuaire (4) des fonctions de recherche servant à trouver des numéros d'appel vidéo dans le service d'annuaire (4) et la possibilité de télécharger en amont des numéros d'appel vidéo dans le service d'annuaire (4).

2. Système selon la revendication 1, dans lequel le défi d'enregistrement comporte une séquence alphanumérique, et le système comporte par ailleurs un service de codage configuré pour
générer un fichier à une image en fonction de la séquence alphanumérique, et
générer un fichier séquence vidéo en créant de multiples copies du fichier d'image et coder les multiples copies du fichier d'image en un format vidéo.

3. Système selon la revendication 2, dans lequel le service de codage est par ailleurs configuré pour générer (20) un fichier séquence audio en fonction de la séquence alphanumérique en utilisant un générateur de parole à partir de texte.

4. Système selon la revendication 3, dans lequel le service d'appel vidéo (7) est par ailleurs configuré pour présenter le défi d'enregistrement à l'utilisateur par le biais d'une session d'appel vidéo par la transmission du fichier séquence vidéo et du fichier séquence audio.

5. Système selon la revendication 1, dans lequel le service d'applications (6) est configuré pour générer un défi d'enregistrement d'image CAPCHTA.

6. Système selon la revendication 1, dans lequel le service d'appel vidéo (7) est configuré pour initialiser la session d'appel vidéo en utilisant l'un parmi les formats SIP, H.323 et Jingle.

7. Système selon la revendication 1, dans lequel le service de codage est configuré pour coder le fichier séquence vidéo en utilisant l'un parmi les formats H.263 et H.264.

8. Procédé de vérification d'une saisie d'un numéro d'appel vidéo dans un service d'annuaire (4), le service d'annuaire comportant une interface client (5) connectée à un réseau informatique (3), un service d'applications (6) et un service d'appel vidéo (7), dans lequel le procédé comporte :
l'étape consistant à recevoir (8) un numéro d'appel vidéo saisi par un utilisateur en utilisant l'interface client (5),
l'étape consistant à soumettre par le biais de l'interface client (5) le numéro d'appel vidéo reçu au service d'applications (6) pour initialiser la vérification du numéro d'appel vidéo,
l'étape consistant à recevoir par le biais du service d'applications (6) le numéro d'appel vidéo en provenance de l'interface client (5) à des fins de vérification,
l'étape consistant à générer (9) par le biais du service d'applications (6) un défi d'enregistrement,
l'étape consistant à stocker (10) par le biais du service d'applications (6) le défi d'enregistrement et le numéro d'appel vidéo dans une session,
l'étape consistant à soumettre par le bais du service d'applications (6) le défi d'enregistrement et le numéro d'appel vidéo au service d'appel vidéo (7),
l'étape consistant à recevoir par le biais du service d'appel vidéo (7) le numéro d'appel vidéo et le défi d'enregistrement en provenance du service d'applications (6),
l'étape consistant à initialiser (12) par le biais du service d'appel vidéo (7) une session d'appel vidéo pour le numéro d'appel vidéo,
dès l'aboutissement de l'initialisation de la session d'appel vidéo, l'étape consistant à présenter (13) le défi d'enregistrement à un utilisateur par le biais de la session d'appel vidéo,
l'étape consistant à recevoir (14) une réponse au défi d'enregistrement saisie par l'utilisateur en utilisant l'interface client (5),
l'étape consistant à soumettre par l'interface client (5) la réponse au défi d'enregistrement reçue au service d'applications (6) pour valider la réponse au défi d'enregistrement,
l'étape consistant à recevoir en provenance du service d'applications (6) la réponse au défi d'enregistrement en provenance de l'interface client (5),
l'étape consistant à charger (15) par le service d'applications (6) le défi d'enregistrement en provenance de la session ; et
au moment de découvrir (16) une correspondance positive entre le défi d'enregistrement et la réponse au défi d'enregistrement, l'étape consistant à mettre à jour (17) par le biais du service d'applications (6) le service d'annuaire (4) pour indiquer le numéro d'appel vidéo comme étant valide,
dans lequel l'étape consistant à générer (9) un défi d'enregistrement comporte par ailleurs :
l'étape consistant à générer (18) un fichier à une image en fonction du défi d'enregistrement ; et
l'étape consistant à générer (19) un fichier séquence vidéo en créant de multiples copies du fichier d'image et l'étape consistant à coder les multiples copies du fichier d'image en un format vidéo,
dans lequel le défi d'enregistrement est présenté à l'utilisateur de manière visuelle par le biais de la session d'appel vidéo par la transmission du fichier séquence vidéo ; et
dans lequel l'interface client (5) est dans un format de page Web et comprend des listes de numéros d'appel vidéo téléchargés en amont dans le service d'annuaire (4), des fonctions de recherche servant à trouver des numéros d'appel vidéo dans le service d'annuaire (4) et la possibilité de télécharger en amont des numéros d'appel vidéo dans le service d'annuaire (4).

9. Procédé selon la revendication 8, dans lequel l'étape consistant à générer (9) un défi d'enregistrement comporte par ailleurs :
l'étape consistant à générer une séquence alphanumérique,
l'étape consistant à générer (18) un fichier à une image en fonction de la séquence alphanumérique ; et
l'étape consistant à générer (19) un fichier séquence vidéo en créant de multiples copies du fichier d'image et l'étape consistant à coder les multiples copies du fichier d'image en un format vidéo.

10. Procédé selon la revendication 9, dans lequel le procédé comporte par ailleurs l'étape consistant à générer un fichier séquence audio en fonction de la séquence alphanumérique en utilisant un générateur de parole à partir de texte.

11. Procédé selon l'une quelconque des revendications 8 à 10, dans lequel le défi d'enregistrement est présenté à l'utilisateur de manière visuelle et auditive par le biais de la session d'appel vidéo.

12. Procédé selon la revendication 8, dans lequel au moins l'un parmi :
le défi d'enregistrement est une image CAPCHTA ;
la session d'appel vidéo est initialisée en utilisant l'un parmi les formats SIP, H.323 et Jingle.

13. Procédé selon la revendication 8, dans lequel le format vidéo du fichier séquence vidéo est l'un parmi les formats H.263 et H.264.
